# EUROPEAN PATENT SPECIFICATION

(11) **EP 4 480 619 B1**
(45) Date of publication and mention of the grant of the patent: **27.05.2026**
(21) Application number: 24182542.1
(22) Date of filing: 17.06.2024
(51) Int. Cl.: B23K 9/073, B23K 9/09, B23K 9/095, B23K 9/173, B23K 9/10, B23K 9/12

(54) **METHOD OF CONTROLLING OF ARC WELDING WITH AC CONSUMABLE ELECTRODE**
VERFAHREN ZUR STEUERUNG EINES LICHTBOGENSCHWEISSENS MIT ABSCHMELZENDER WECHSELSTROMELEKTRODE
PROCÉDÉ DE CONTRÔLE D'UN SOUDAGE À L'ARC AVEC ÉLECTRODE CONSOMMABLE EN COURANT ALTERNATIF

(30) Priority: 19.06.2023 JP 2023099722
(43) Date of publication of application: 25.12.2024
(73) Proprietor: DAIHEN Corporation, Yodogawa-ku Osaka-shi Osaka 532-8512 (JP)
(72) Inventor: TAKADA, Kento, Osaka-shi 532-8512 (JP)
(74) Representative: Boult Wade Tennant LLP

(56) References cited:
- JP-A- 2017 024 054
- JP-A- 2017 064 721
- US-A1- 2013 082 041

## Description

The present invention relates to a method of control of arc welding with an AC consumable electrode (see claim 1), in which a short-circuiting period and an arc period are repeated between a welding wire and a base material and welding is performed with cyclically switching an electrode polarity between an electrode positive polarity period and an electrode negative polarity period.

### BACKGROUND

Conventionally, a method for arc welding with an AC consumable electrode has been used, in which welding is performed with cyclically switching an electrode polarity between an electrode positive polarity period and an electrode negative polarity period, each including cycles of short-circuiting periods and cycles of arc periods (see, for example, JP-B-6601870).

In a conventional method for arc welding with an AC consumable electrode, a welding status during an electrode negative polarity period tends to be unstable, so that there occurs a problem that the welding quality deteriorates.

JP2017024054A (describing the preamble of claim 1) shows a reciprocal feed AC arc welding method for welding by alternately switching voltage impressed on an arc to electrode positive polarity and electrode negative polarity, by alternately switching a feed speed of a welding wire to a normal feed period and an inverse feed period. A waveform parameter (such as amplitude and a frequency) of the feed speed is automatically switched by interlocking with switching of the electrode positive polarity and the electrode negative polarity.

### SUMMARY

As such, the present invention is directed to provide a method of control of arc welding with an AC consumable electrode for securing a favorable welding quality by stabilizing a welding status during an electrode negative polarity period.

For solving the above problem, according to one aspect of the present invention, a method of control of arc welding with an AC consumable electrode is provided according to claim 1.

Preferably, the method may further comprise: setting a switching period from the peak value of the backward-feeding to the peak value of the forward-feeding and a switching period from the peak value of the forward-feeding to the peak value of the backward-feeding to be shorter during the electrode negative polarity period than during the electrode positive polarity period.

Preferably, the method may further comprise: controlling an output by a constant voltage control for at least a part of the arc period in the electrode positive polarity period; and controlling the output by a constant current control for an entirety of the arc period in the electrode negative polarity period.

Preferably, the arc period in each of the electrode negative polarity period and the electrode positive polarity period may include a first arc period, a second arc period, and a third arc period, and the method may further comprise: increasing a welding current during the first arc period by an inclination from a low level current value; and setting an increasing rate of the inclination to be smaller in the electrode negative polarity period than in the electrode positive polarity period.

Preferably, the arc period in each of the electrode negative polarity period and the electrode positive polarity period may include a first arc period, a second arc period, and a third arc period, and the method may further comprise: setting a maximum value of a welding current during the first arc period to be smaller in the electrode negative polarity period than in the electrode positive polarity period.

According to the present invention favorable welding quality can be secured by stabilizing a welding status during an electrode negative polarity period.

### BRIEF DESCRIPTION OF DRAWINGS

Fig. 1 is a block diagram of a welding power supply for conducting the control method for arc welding with an AC consumable electrode according to an embodiment of the present invention.
Fig. 2 is a timing chart of the respective signals at the welding power supply of Fig. 1, showing the control method for arc welding with an AC consumable electrode according to an embodiment of the present invention.

### EMBODIMENTS

Preferred embodiments of the present invention are described below with reference to drawings.

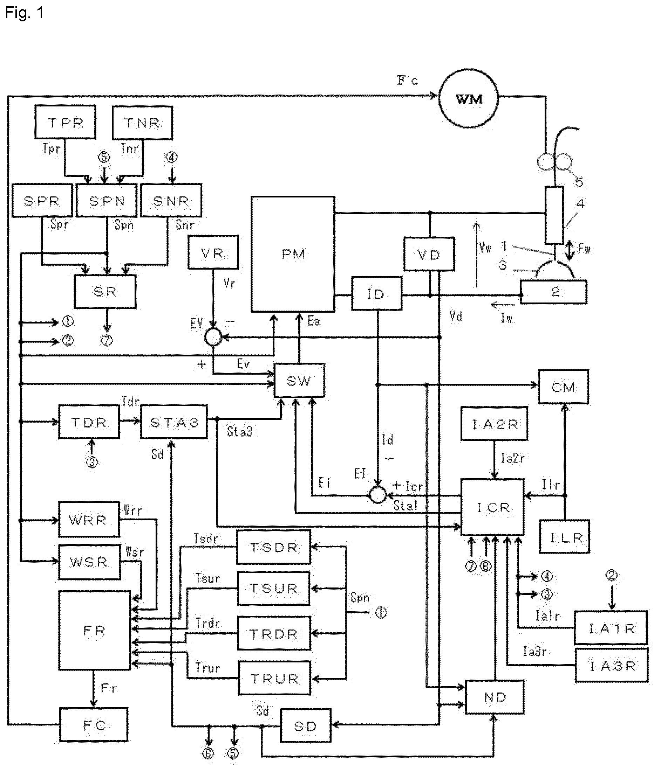

Fig. 1 is a block diagram of a welding power supply for conducting the method of control of arc welding with an AC consumable electrode according to an embodiment.

Below, the respective blocks are explained with reference to Fig. 1.

A main power supply circuit PM receives an input of a voltage from a commercial power supply such as a three-phase 200V power supply (not shown), receives a discrepancy amplification signal Ea to be described later and a polarity switching signal Spn to be described later as an input to perform output control in a primary inverter circuit based on the discrepancy amplification signal Ea, switches an electrode polarity between an electrode positive polarity period EP and an electrode negative polarity period EN in a secondary inverter circuit based on a polarity switching signal Spn, and outputs a welding voltage Vw and a welding current Iw, which are AC. The main power supply circuit PM includes, though not shown, for example, a primary rectifier for rectifying a current from a commercial power supply into a DC, a smoothing condenser for smoothing the rectified DC current, a primary inverter circuit driven by the above discrepancy amplification signal Ea for converting the smoothed DC to a high frequency AC, a high frequency transformer for lowering the voltage value of the high frequency AC so that it is appropriate for welding, a secondary rectifier for rectifying the lowered high frequency AC voltage into a DC voltage, a reactor for smoothing the rectified DC, and a secondary inverter circuit driven by the above polarity switching signal Spn for converting the smoothed DC to an AC output.

The feeding motor WM receives an input of a feeding control signal Fc to be described later, and feeds the welding wire 1 at a feeding speed Fw by alternately repeating a forward feeding and a backward feeding. As the forward feeding motor WM, a motor with quick transient responsivity is used. For quickening a change rate and a reversal of the feeding direction of the feeding speed Fw of the welding wire 1, the feeding motor WM may be installed at a location close to the tip of a welding torch 4. Further, two sets of feeding motors WM may be used to have a push-pull style feeding system.

The welding wire 1 is fed through a welding torch 4 by a rotation of a feeding roll 5 combined to the above feeding motor WM, an arc 3 occurs between the welding torch and a base material 2. Between a power feeding chip (not shown) inside the welding torch 4 and the base material 2 a welding voltage Vw, which is AC, is applied, and a welding current Iw, which is AC, runs therebetween. From the tip of the welding torch 4 shield gas (not shown) is ejected. As the shield gas, Carbon dioxide gas, mixed gas composed of Carbon dioxide gas and Argon gas and mixed gas composed of Oxygen gas and Argon gas, and so forth are used.

A voltage setting circuit VR outputs a predetermined voltage setting signal Vr for setting a welting voltage Vw during a second arc period in the electrode positive polarity period. A voltage detection circuit VD detects the above welding voltage Vw, converts it into an absolute value, and outputs a voltage detection signal Vd. A short-circuiting determination circuit SD receives an input of the above voltage detection signal Vd, and outputs a short-circuiting determination signal Sd. When the voltage detection signal Vd is lower than a predetermined short-circuiting determination value (around 10V), the process is determined to be in the short-circuiting period and the short-circuiting determination signal Sd is set to a "High" level, and when the voltage detection signal Vd is equal to or higher than the short-circuiting determination value, the process is determined to be in an arc period and the short-circuiting determination signal Sd is set to a "Low" level.

A voltage discrepancy amplification circuit EV receives inputs of the above voltage setting signal Vr and the above voltage detection signal Vd, amplifies a discrepancy between the voltage setting signal Vr and the voltage detection signal Vd, and outputs a voltage discrepancy amplification signal Ev.

A current detection circuit ID detects the above welding current Iw, converts it into an absolute value, and outputs a current detection signal Id.

A forward feeding acceleration period setting circuit TSUR receives an input of a polarity switching signal Spn to be described later, and outputs a forward feeding acceleration period setting signal Tsur. When the polarity switching signal Spn is set to a "High" level (the electrode positive polarity period), the forward feeding acceleration period setting signal Tsur transitions the process into a predetermined electrode positive polarity forward feeding acceleration period. When the polarity switching signal Spn is set to a "Low" level (the electrode negative polarity period), the forward feeding acceleration period setting signal Tsur transitions the process into a predetermined electrode negative polarity forward feeding acceleration period. The electrode negative polarity forward feeding acceleration period is set to be shorter than the electrode positive polarity forward feeding acceleration period.

A forward feeding deceleration period setting circuit TSDR receives an input of a polarity switching signal Spn to be described later, and outputs a forward feeding deceleration period setting signal Tsdr. When the polarity switching signal Spn is set to a "High" level (the electrode positive polarity period), the forward feeding deceleration period setting signal Tsdr transitions the process into a predetermined electrode positive polarity forward feeding deceleration period. When the polarity switching signal Spn is set to a "Low" level (the electrode negative polarity period), the forward feeding deceleration period setting signal Tsdr transitions the process into a predetermined electrode negative polarity forward feeding deceleration period. The electrode negative polarity forward feeding deceleration period is set to be shorter than the electrode positive polarity forward feeding deceleration period.

A backward feeding acceleration period setting circuit TRUR receives an input of a polarity switching signal Spn to be described later, and outputs a backward feeding acceleration period setting signal Trur. When the polarity switching signal Spn is set to a "High" level (the electrode positive polarity period), the backward feeding acceleration period setting signal Trur transitions the process into a predetermined electrode positive polarity backward feeding acceleration period. When the polarity switching signal Spn is set to a "Low" level (the electrode negative polarity period), the backward feeding acceleration period setting signal Trur transitions the process into a predetermined electrode negative polarity backward feeding acceleration period. The electrode negative polarity backward feeding acceleration period is set to be shorter than the electrode positive polarity backward feeding acceleration period.

A backward feeding deceleration period setting circuit TRDR receives an input of a polarity switching signal Spn to be described later, and outputs a backward feeding deceleration period setting signal Trdr. When the polarity switching signal Spn is set to a "High" level (the electrode positive polarity period), the backward feeding deceleration period setting signal Trdr transitions the process into a predetermined electrode positive polarity backward feeding deceleration period. When the polarity switching signal Spn is set to a "Low" level (the electrode negative polarity period), the backward feeding deceleration period setting signal Trdr transitions the process into a predetermined electrode negative polarity backward feeding deceleration period. The electrode negative polarity backward feeding deceleration period is set to be shorter than the electrode positive polarity backward feeding deceleration period.

A forward feeding peak value setting circuit WSR receives an input of a polarity switching signal Spn to be described later, and outputs a forward feeding peak value setting signal Wsr. When the polarity switching signal Spn is set to a "High" level (the electrode positive polarity period), the forward feeding peak value setting signal Wsr transitions the process into a predetermined electrode positive polarity forward feeding peak value. When the polarity switching signal Spn is set to a "Low" level (the electrode negative polarity period), the forward feeding peak value setting signal Wsr transitions the process into a predetermined electrode negative polarity forward feeding peak value. The absolute value of the electrode negative polarity forward feeding peak value is set to be larger than the absolute value of the electrode positive polarity forward feeding peak value.

A backward feeding peak value setting circuit WRR receives an input of a polarity switching signal Spn to be described later, and outputs a backward feeding peak value setting signal Wrr. When the polarity switching signal Spn is set to a "High" level (i.e. the electrode positive polarity period), the backward feeding peak value setting signal Wrr transitions the process into a predetermined electrode positive polarity backward feeding peak value. When the polarity switching signal Spn is set to a "Low" level (i.e. the electrode negative polarity period), the backward feeding peak value setting signal Wrr transitions the process into a predetermined electrode negative polarity backward feeding peak value. The absolute value of the electrode negative polarity backward feeding peak value is set to be larger than the absolute value of the electrode positive polarity backward feeding peak value.

The feeding speed setting circuit FR receives inputs of the above forward feeding acceleration period setting signal Tsur, the above forward feeding deceleration period setting signal Tsdr, the above backward feeding acceleration period setting signal Trur, the above backward feeding deceleration period setting signal Trdr, the above forward feeding peak value setting signal Wsr, the above backward feeding peak value setting signal Wrr, and the above short-circuiting determination signal Sd, and outputs a feeding speed pattern generated by the following processing as a feeding speed setting signal Fr. When the feeding speed setting signal Fr is 0 or more, the process is determined to be in the forward feeding period, and the feeding speed setting signal Fr is less than 0, the process is determined to be in the backward feeding period.
1) During the forward feeding acceleration period Tsu determined by the forward feeding acceleration period setting signal Tsur, the feeding speed setting signal Fr is output which is to accelerate the feeding speed from 0 to a forward feeding peak value Wsp of a positive value determined by the forward feeding peak value setting signal Wsr.
2) Subsequently, during the forward feeding peak period Tsp, the feeding speed setting signal Fr is output which is to have the feeding speed maintained as the above forward feeding peak value Wsp.
3) When the short-circuiting determination signal Sd changes from the Low level (the arc period) to the High level (the short-circuiting period), the process enters in the forward feeding deceleration period Tsd determined by the forward feeding deceleration period setting signal Tsdr, and the feeding speed setting signal Fr is output, which has the feeding speed decelerated from the above forward feeding peak value Wsp to 0.
4) Subsequently, during the backward feeding acceleration period Tru determined by the backward feeding acceleration period setting signal Trur, the feeding speed setting signal Fr is output, which has the feeding speed accelerated from 0 to a backward feeding peak value Wrp of a negative value determined by the backward feeding peak value setting signal Wrr.
5) Subsequently, during the backward feeding peak period Trp, the feeding speed setting signal Fr is output, which has the feeding speed maintained at the above backward feeding peak value Wrp.
6) When the short-circuiting determination signal Sd changes from the High level (the short-circuiting period) to the Low level (the arc period), the process enters in the backward feeding deceleration period Trd determined by the backward feeding deceleration period setting signal Trdr, and the feeding speed setting signal Fr is output, which has the feeding speed decelerated from the above backward feeding peak value Wrp to 0.
7) By repeating above 1)-6), the feeding speed setting signal Fr is generated, which varies as a feeding pattern of a positive/negative trapezoidal wave.

The feeding control circuit FC receives an input of the above feeding speed setting signal Fr, and outputs, to the above feeding motor WM, the feeding control signal Fc for feeding the welding wire 1 by the feeding speed Fw corresponding to the value of the feeding speed setting signal Fr.

A constriction detection circuit ND receives an inputs of the above short-circuiting determination signal Sd, the above voltage detection signal Vd, and the above current detection signal Id, and outputs a constriction detection signal Nd, which changes to the High level at the time point when the voltage increase of the voltage detection signal Vd reaches a reference value while the short-circuiting determination signal Sd is at the High level (the short-circuiting period) with a determination that the formation status of the constriction has reached the reference status, and changes to the Low level at the time point when the short-circuiting determination signal Sd changes to the Low level (the arc period). Also, it may be configured that the constriction detection signal Nd changes to the High level at the time point when the differential value of the voltage detection signal Vd during the short-circuiting period reaches a reference value corresponding thereto. Further, it may be configured that the resistance value of the droplet is calculated by dividing the value of the voltage detection signal Vd by the value of the current detection signal Id, and the constriction detection signal Nd is changed to the High level at the time point when the differential value of this resistance value reaches the reference value corresponding thereto.

A low level current setting circuit ILR outputs a predetermined low level current setting signal Ilr. A current comparison circuit CM receives an inputs of this low level current setting signal Ilr and the above current detection signal Id, and outputs a current comparison signal Cm which changes to the High level when Id is less than Ilr, and changes to the Low level when Id is Ilr or more.

The first arc current setting circuit IA1R receives an input of a polarity switching signal Spn to be described later, and outputs a first arc current setting signal Ia1r. When the polarity switching signal Spn is set to a "High" level (the electrode positive polarity period), the first arc current setting signal Ia1r is set equal to a predetermined electrode positive polarity first arc current value. When the polarity switching signal Spn is set to a "Low" level (the electrode negative polarity period), the first arc current setting signal Ia1r is set equal to a predetermined electrode negative polarity first arc current value. The electrode positive polarity first arc current value is larger than the electrode negative polarity first arc current value.

The electrode negative polarity second arc current setting circuit IA2R outputs a predetermined electrode negative polarity second arc current setting signal Ia2r. The electrode negative polarity second arc current setting signal Ia2r decreases over time during the second arc period in the electrode negative polarity period.

A current decreasing time setting circuit TDR receives inputs of the above first arc current setting signal Ia1r and a polarity switching signal Spn to be described later, and outputs a current decreasing time setting signal Tdr. When the polarity switching signal Spn is set to a "High" level (the electrode positive polarity period), the current decreasing time setting signal Tdr transitions the process into a predetermined electrode positive polarity current decreasing time. When the polarity switching signal Spn is set to a "Low" level (the electrode negative polarity period), the current decreasing time setting signal Tdr transitions the process into a predetermined electrode negative polarity current decreasing time, which varies as a function of the electrode negative polarity first arc current value determined by the first arc current setting signal Ia1r.

A third arc period circuit STA3 receives inputs of the above short-circuiting determination signal Sd and the above current decreasing time setting signal Tdr, and outputs the third arc period signal Sta3. The third arc period signal Sta3 changes to the High level when a current decreasing time Td, which is determined by the current decreasing time setting signal Tdr, has passed after the short-circuiting determination signal Sd is changed to the Low level (the arc period). Then, the third arc period signal Sta3 changes to the Low level when the short-circuiting determination signal Sd is changed to the High level (the short-circuiting period) .

A third arc current setting circuit IA3R outputs a predetermined third arc current setting signal Ia3r.

An electrode positive polarity increasing rate setting circuit SPR outputs a predetermined electrode positive polarity increasing rate setting signal Spr [A/ms]. An electrode negative polarity increasing rate setting circuit SNR receives an input of the above first arc current setting signal Ia1r, and outputs an electrode negative polarity increasing rate setting signal Snr [A/ms] that is calculated by a predetermined increasing rate setting function.
1) The signal Snr is less than the signal Spr.
2) The signal Snr is equal or less than 50% of the signal Spr. More preferably, the signal Snr is equal or less than 30% of the signal Spr.
3) The signal Snr is set to a value in the range of 50-500A/ms. More preferably, the signal Snr is set to a value in the range of 50-200A/ms.
4) The signal Snr is a function of (or depends on) the signal Ia1r, such that the larger the signal Ia1r is, the smaller the signal Snr is. For example, supposing that the signal Ia1r varies in the range of 300-400A, the signal Snr at the signal Ia1r =400 is set to be 20% less than the signal Snr at the signal Ia1r =300.

An increasing rate setting circuit SR receives inputs of the above electrode positive polarity increasing rate setting signal Spr, the above electrode negative polarity increasing rate setting signal Snr, and a polarity switching signal Spn to be described later, and outputs an increasing rate setting signal Sr. When the polarity switching signal Spn is set to a "High level", the increasing rate setting signal Sr is equal to the electrode positive polarity increasing rate setting signal Spr. When the polarity switching signal Spn is set to a "Low level", the increasing rate setting signal Sr is equal to the electrode negative polarity increasing rate setting signal Snr.

An electrode positive polarity period setting circuit TPR outputs a predetermined electrode positive polarity period setting signal Tpr. An electrode negative polarity period setting circuit TNR outputs a predetermined electrode negative polarity period setting signal Tnr.

A polarity switching circuit SPN receives inputs of the above electrode positive polarity period setting signal Tpr, the above electrode negative polarity period setting signal Tnr, and the above short-circuiting determination signal Sd, and output a polarity switching signal Spn, which is converted between the High level and the Low level by the polarity switching circuit SPN through the following processings.
1) The polarity switching signal Spn is output at the High level during the period determined by the electrode positive polarity period setting signal Tpr. When the period determined by the electrode positive polarity period setting signal Tpr has passed and the short-circuiting determination signal Sd changes to the High level (the short-circuiting period), the polarity switching signal Spn is changed to the Low level (the electrode negative polarity period).
2) The polarity switching signal Spn at the Low level is maintained during the period determined by the electrode negative polarity period setting signal Tnr. When the period determined by the electrode negative polarity period setting signal Tnr has passed and the short-circuiting determination signal Sd changes to the High level (the short-circuiting period), the polarity switching signal Spn is changed to the High level (the electrode positive polarity period).

A current control setting circuit ICR receives inputs of the above short-circuiting determination signal Sd, the above low level current setting signal Ilr, the above constriction detection signal Nd, the above third arc period signal Sta3, the above first arc current setting signal Ia1r, the above third arc current setting signal Ia3r, the above increasing rate setting signal Sr, and the above electrode negative polarity second arc current setting signal Ia2r, and executes the following processings to output the current control setting signal Icr and the first arc period signal Sta1.
1) During the predetermined delay period Tc from the time point when the short-circuiting determination signal Sd changes to the Low level (the arc period), the current control setting signal Icr is output, which takes the value of the low level current setting signal Ilr.
2) When the delay period Tc ends, the current control setting signal Icr is output at the value that increases from the value of the low level current setting signal Ilr to the value of the first arc current setting signal Ia1r by the increasing rate determined by the increasing rate setting signal Sr. This period corresponds to the first arc period Ta1 when the first arc period signal Sta1 is output at the High level.
3) Thereafter, during the second arc period Ta2, which ends at the time when the third arc period signal Sta3 changes to the High level, the current control setting signal Icr is output, which takes the value of the electrode negative polarity second arc current setting signal Ia2r.
4) Thereafter, during the third arc period Ta3, which ends at the time when the short-circuiting determination signal Sd changes to the Low level (the arc period), the current control setting signal Icr is output, which takes the value of the third arc current setting signal Ia3r.
5) When the short-circuiting determination signal Sd changes to the High level (the short-circuiting period), the current control setting signal Icr is output, which takes a predetermined initial current setting value during a predetermined initial period, and thereafter increases to a predetermined short-circuiting time peak setting value with a predetermined inclination of the short-circuiting time, and maintains its value.
6) After that, when the constriction detection signal Nd changes to the High level, the current control setting signal Icr is output, which takes the value of the low level current setting signal Ilr.

A current discrepancy amplification circuit EI receives inputs of the above current control setting signal Icr and the above current detection signal Id, amplifies the discrepancy between the current control setting signal Icr and the current detection signal Id, and outputs a current discrepancy amplification signal Ei.

A power supply characteristic switching circuit SW receives inputs of the above current discrepancy amplification signal Ei, the above voltage discrepancy amplification signal Ev, the above first arc period signal Sta1, the above third arc period signal Sta3, and the above polarity switching signal Spn, and executes the following processings to output the above discrepancy amplification signal Ea.
1) During the second arc period Ta2 in the electrode positive polarity period, the voltage discrepancy amplification signal Ev is output as the discrepancy amplification signal Ea. The second arc period Ta2, for which the polarity switching signal Spn is at the High level (the electrode positive polarity EP), starts from the time point when the first arc period signal Sta1 changes to the Low level and ends at the time point when the third arc period signal Sta3 changes to the High level.
2) During the other periods, the current discrepancy amplification signal Ei is output as the discrepancy amplification signal Ea. Thus, according to the circuit SW, the welding power supply has the constant current characteristics during the short-circuiting period, the delay period, the first arc period Ta1, the second arc period Ta2 in the electrode negative polarity period, and the third arc period Ta3, while having the constant voltage characteristics during the second arc period Ta2 in the electrode positive polarity period. Therefore, the output is controlled to be the constant voltage during at least a part of the arc period in the electrode positive polarity period, and the output is controlled to be the constant current during the entire arc periods in the electrode negative polarity period.

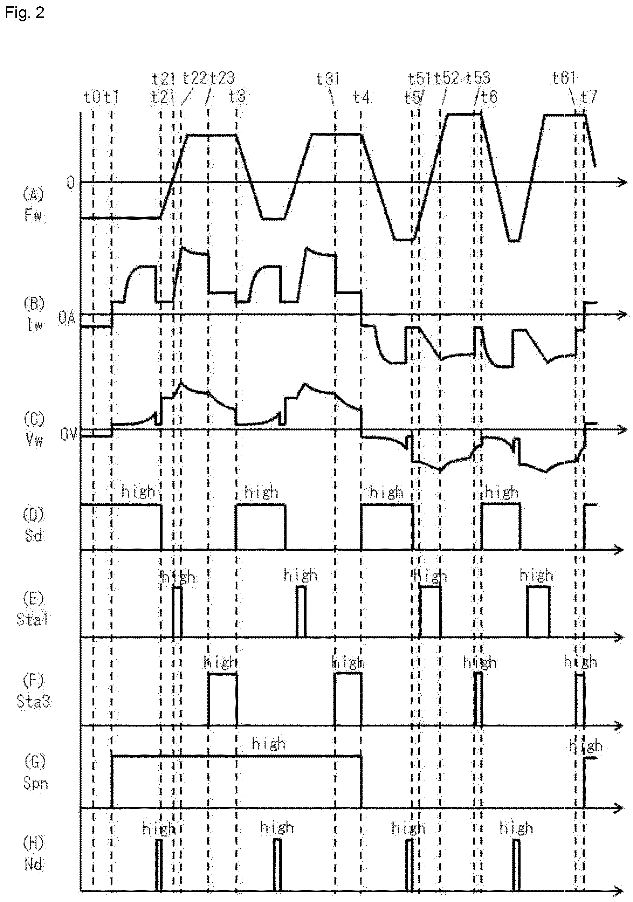

Fig. 2 is a timing chart of the respective signals at the welding power supply of Fig. 1 which shows the method of control of arc welding with an AC consumable electrode according to an embodiment. Fig. 2(A) shows the temporal variation of the feeding speed Fw, Fig. 2(B) shows the temporal variation of the welding current Iw, Fig. 2(C) shows the temporal variation of the welding voltage Vw, Fig. 2(D) shows the temporal variation of the short-circuiting determination signal Sd, Fig. 2(E) shows the temporal variation of the first arc period signal Sta1, Fig. 2(F) shows the temporal variation of the third arc period signal Sta3, Fig. 2(G) shows the temporal variation of the polarity switching signal Spn, and Fig. 2(H) shows the temporal variation of the constriction detection signal Nd. Below, the operation of the respective signals is explained with reference to those drawings.

Referring to Fig. 2(A), when the feeding speed Fw is above 0, it corresponds to a forward feeding period when the welding wire is fed in the direction to the base material. When the feeding speed Fw is below 0, it corresponds to a backward feeding period when the welding wire is fed in the direction away from the base material. In Fig. 2(B) and (C), when the welding current Iw and the welding voltage Vw are above 0, it corresponds to the electrode positive polarity EP, and when the welding current Iw and the welding voltage Vw are below 0, it corresponds to the electrode negative polarity EN. When each value of the feeding speed Fw, the welding current Iw and the welding voltage Vw changes from large to small, the absolute value also changes correspondingly. For example, during the backward feeding of the feeding speed Fw, increasing of a value means increasing of an absolute value. Similarly, during the electrode negative polarity period Ten of the welding current Iw and the welding voltage Vw, increasing of a value means increasing of an absolute value. The polarity switching signal Spn shown in Fig. 2(G) controls the secondary inverter circuit within the main power supply circuit PM in Fig. 1 to set the electrode positive polarity period Tep when the polarity switching signal Spn is High level and the electrode negative polarity period Ten when the polarity switching signal Spn is Low level.

In Fig. 2, the electrode positive polarity period Tep is composed of the period from time t1-t4, and the electrode negative polarity period Ten is composed of the period from time t4-t7. The electrode positive polarity period Tep corresponds to the period determined by the electrode positive polarity period setting signal Tpr of Fig. 1 combined with the period until the short circuit occurs. The electrode negative polarity period Ten corresponds to the period determined by the electrode negative polarity period setting signal Tnr of Fig. 1 combined with the period until the short circuit occurs. When the AC is set to a frequency of 0.1-30Hz and a duty of 20-80%, each of the electrode positive polarity period Tep and the electrode negative polarity period Ten is set to 7ms to 8s. Each period includes at least one arc period. For example, when the AC is set to a frequency of 10Hz and a duty of 50%, each of the electrode positive polarity period Tep and the electrode negative polarity period Ten is equal to 50ms. In this case, the cycle of the short-circuiting period and the arc period is equal to 10ms, and hence including 5 cycles of the short-circuiting period and the arc period.

### <1. Operation during the electrode positive polarity period Tep>

At time t0, which corresponds to the short-circuiting period in the electrode negative polarity period Ten, as shown in Fig. 2(G), the polarity switching signal Spn is set to the Low level. As shown in Fig. 2(A), the feeding speed Fw is set to the electrode negative polarity backward feeding peak value. As shown in Fig. 2(B), the welding current Iw is set to the negative initial current value. As shown in Fig. 2(C), the welding voltage Vw is set to several volts of the negative short-circuiting voltage value. As shown in Fig. 2(D), the short-circuiting determination signal Sd is set to the High level (the short-circuiting period).

At time t1, when the polarity switching signal Spn changes to the High level, as shown in Fig. 2(G), the process enters in the electrode positive polarity period Tep. In response to this, as shown in Fig. 2(A), the feeding speed Fw accelerates to the electrode positive polarity backward feeding peak value. As shown in Fig. 2(B), the welding current Iw is controlled to be the constant current during the short-circuiting period, and then it changes to the positive initial current value. As shown in Fig. 2(C), the welding voltage Vw changes to the positive short-circuiting voltage value. The timing at which the polarity switching signal Spn changes to the High level at time t1 corresponds either to immediately after the occurrence of the short circuit or to the elapse of a predetermined period (about 1ms) after the short circuit has occurred during the short-circuiting period.

Thereafter, the predetermined initial period has ended, then, as shown in Fig. 2(B), the welding current Iw increases by the predetermined inclination of the short-circuiting time, and when it reaches the predetermined peak value of the short-circuiting time, it maintains its value. As shown in Fig. 2(C), the welding voltage Vw starts increasing at around the time point when the welding current Iw reaches the peak value of the short-circuiting time. This is because the constriction is gradually formed at a droplet on a tip of the welding wire 1, due to a pinch force according to the welding current Iw and the backward feeding of the welding wire 1. Thereafter, when the voltage increase amount of the welding voltage Vw reaches the reference value, it is determined that the formation status of the constriction is at the reference status, and the constriction detection signal Nd of Fig. 2(H) changes to the High level. In response to this, the current control setting signal Icr decreases to the value of the low level current setting signal Ilr. Therefore, as shown in Fig. 2(B), the welding current Iw rapidly decreases from the peak value of the short-circuiting time to the low level current value. Further, when the welding current Iw decreases to the low level current value, the welding current Iw maintains its low level current value from the re-occurrence of the arc until the elapse of the predetermined delay period Tc, as the current control setting signal Icr remains to be the low level current setting signal Ilr. To more quickly perform the rapid deceleration of the welding current Iw at the time point when the constriction is detected, it is preferable to provide a circuit with a resistor and a switching element connected in parallel each other in the current path of the welding current Iw. The switching element is set to the on state and the resistor is short-circuited until the construction is detected, so that the deceleration speed is set to a normal speed. After the construction is detected, the switching element is turned off and the resistor is inserted in the current path, so that the rapid deceleration is quickly performed. For example, the above initial period is set to 1ms, the initial current value is set to 50A, the inclination of the short-circuiting time is set to 400A/ms, the peak value of the short-circuiting time is set to 450A, and the low level current value is set to 50A. As shown in Fig. 2(H), the constriction detection signal Nd returns to the Low level after the re-occurrence of the arc at time t2.

At time t2, as the constriction is developed due to a pinch force according to the welding current Iw and the backward feeding of the welding wire, the arc occurs, and the welding voltage Vw rapidly increases to tens of volts of the arc voltage value as shown in Fig. 2(C). Therefore, as shown in Fig. 2(D), the short-circuiting determination signal Sd changes to the Low level (the arc period). In response to this, as shown in Fig. 2(A), the feeding speed Fw starts switching from the peak value of the electrode positive polarity backward feeding to the peak value of the electrode positive polarity forward feeding. The switching period from the peak value of the electrode positive polarity backward feeding to the peak value of the electrode positive polarity forward feeding corresponds to the sum of the electrode positive polarity backward feeding deceleration period and the electrode positive polarity forward feeding acceleration period of Fig. 1. For example, each of the electrode positive polarity backward feeding deceleration period and the electrode positive polarity forward feeding acceleration period is set to 1ms. During the predetermined delay period Tc from time t2 to time t21, as shown in Fig. 2(B), the constant current control is performed to maintain the welding current Iw at the low level current value. As shown in Fig. 2(C), the welding voltage Vw changes to the arc voltage value. For example, the peak value of the electrode positive polarity forward feeding is set to 50m/min, and the peak value of the electrode positive polarity backward feeding is set to - 30m/min. The delay period Tc is set to around 0-0.5ms. The period Tc =0 corresponds to the absence of the delay period Tc.

At time t21, when the delay period Tc ends, as shown in Fig. 2(E), the first arc period signal Sta1 changes to the High level. In respond to this, the constant current control is performed continuously, and as shown in Fig. 2(B), the welding current Iw increases from the low level current to the electrode positive polarity first arc current determined by the first arc current setting signal Ia1r of Fig. 1 by the increasing rate determined by the electrode positive polarity increasing rate setting signal Spr of Fig. 1. At time t22, when the welding current Iw increases to the electrode positive polarity first arc current value, as shown in Fig. 2(E), the first arc period signal Sta1 changes to the Low level, and the process ends the first arc period. As shown in Fig. 2(C), the welding voltage Vw also increases by an inclination. The electrode positive polarity increasing rate is set to around 500-1000A/ms, and the electrode positive polarity first arc current value is set to around 400-500A.

At time t23, after an elapse of the electrode positive polarity current decreasing time Td, which is determined by the current decreasing time setting signal Tdr of Fig. 1 and starts from the time t2 of the occurrence of the arc, the third arc period signal Stas3 changes to the High level as shown in Fig. 2(F). The period of time t22-t23 corresponds to the second arc period Ta2. During this second arc period Ta2, the constant current control is performed, and the arc length is maintained at the proper value. As shown in Fig. 2(B), the welding current Iw gradually decreases. As shown in Fig. 2(C), the welding voltage Vw gradually decreases while the constant voltage control is performed. For example, the electrode positive polarity current decreasing time Td is set to 6ms. The second arc period Ta2 does not take a predetermined value, but is set to 5ms.

The period between time t23 when the third arc period signal Sta3 changes to the High level and time t3 when the short circuit occurs corresponds to the third arc period Ta3. During this third arc period Ta3, the constant current control is performed. As shown in Fig. 2(B), the welding current Iw takes the value determined by the third arc current setting signal Ia3r of Fig. 1. As shown in Fig. 2(C), the welding voltage Vw takes a value less than a voltage value during the second arc period. For example, the third arc current is set to 50A. The third arc period Ta3 does not take a predetermined value, but is around 1ms. The welding current Iw takes a small value, so that the next short-circuiting occurs earlier. When the short circuit occurs at time t3, as shown in Fig. 2(D), the short-circuiting determination signal Sd changes to the High level. In respond to this, as shown in Fig. 2(A), the feeding speed Fw starts switching from the peak value of the electrode positive polarity forward feeding to the peak value of the electrode positive polarity backward feeding. The switching period from the peak value of the electrode positive polarity forward feeding to the peak value of the electrode positive polarity backward feeding corresponds to the sum of the electrode positive polarity forward feeding deceleration period and the electrode positive polarity backward feeding acceleration period. For example, the sum of the electrode positive polarity forward feeding deceleration period and the electrode positive polarity backward feeding acceleration period is set to 1ms.

Between time t3-t4, the short-circuiting period starts again, followed by the arc period. The operation during this period is same as the above, and thus the explanation is not repeated.

### <2. Operation during the electrode negative polarity period Ten>

At time t31, which is in the middle of the third arc period Ta3 of the electrode positive polarity period Tep, the period determined by the electrode positive polarity period setting signal Tpr of Fig. 1 and starting from time t1 comes to an end. Then, at time t4, when the short circuit occurs, as shown in Fig. 2(C), the welding voltage Vw takes the positive short-circuiting voltage value, and as shown in Fig. 2(D), the short-circuiting determination signal Sd changes to the High level. In response to this, as shown in Fig. 2(G), the polarity switching signal Spn changes to the Low level, and the process enters in the electrode negative polarity period Ten. In response to this, as shown in Fig. 2(A), the feeding speed Fw changes from the peak value of the electrode positive polarity forward feeding to the peak value of the electrode negative polarity backward feeding. As shown in Fig. 2(B), the welding current Iw is controlled to be the constant current during the short-circuiting period, and then it changes to the negative initial current value. As shown in Fig. 2(C), the welding voltage Vw changes to the negative short-circuiting voltage value. The timing at which the polarity switching signal Spn changes to the Low level at time t4 corresponds either to immediately after the short circuit occurs or to the elapse of a predetermined period (about 1ms) after the short circuit has occurred during the short-circuiting period.

Thereafter, the predetermined initial period has ended, then, as shown in Fig. 2(B), the welding current Iw increases by the predetermined inclination of the short-circuiting time, and when it reaches the predetermined peak value of the short-circuiting time, it maintains its value. As shown in Fig. 2(C), the welding voltage Vw starts increasing at around the time point when the welding current Iw reaches the peak value of the short-circuiting time. This is because the constriction is gradually formed at a droplet on a tip of the welding wire 1, due to a pinch force according to the welding current Iw and the backward feeding of the welding wire 1. Thereafter, when the voltage increase amount of the welding voltage Vw reaches the reference value, it is determined that the formation status of the constriction is at the reference status, and as shown in Fig. 2(H), the constriction detection signal Nd changes to the High level. In response to this, the current control setting signal Icr decreases to the value of the low level current setting signal Ilr. Therefore, as shown in Fig. 2(B), the welding current Iw rapidly decreases from the peak value of the short-circuiting time to the low level current value. Further, when the welding current Iw decreases to the low level current value, as shown in Fig. 2(B), the welding current Iw maintains its low level current value from the re-occurrence of the arc until the elapse of the predetermined delay period Tc, as the current control setting signal Icr does remain to be the low level current setting signal Ilr. The value of the above initial period, the initial current value, the inclination of the short-circuiting time, the peak value of the short-circuiting time, and the low level current value may each be set equal to those for the electrode positive polarity period, but may be set to different values considering the electrode negative polarity characteristics. As shown in Fig. 2(H), the constriction detection signal Nd returns to the Low level after the re-occurrence of the arc at time t5.

At time t5, as the arc occurs after the constriction is developed due to a pinch force according to the welding current Iw and the backward feeding of the welding wire, the welding voltage Vw rapidly increases to tens of volts of the arc voltage value as shown in Fig. 2(C). Therefore, as shown in Fig. 2(D), the short-circuiting determination signal Sd changes to the Low level (the arc period). In response to this, as shown in Fig. 2(A), the feeding speed Fw starts switching from the peak value of the electrode negative polarity backward feeding to the peak value of the electrode negative polarity forward feeding. The switching period from the peak value of the electrode negative polarity backward feeding to the peak value of the electrode negative polarity forward feeding corresponds to the sum of the electrode negative polarity backward feeding deceleration period and the electrode negative polarity forward feeding acceleration period. For example, each of the electrode negative polarity backward feeding deceleration period and the electrode negative polarity forward feeding acceleration period is set to 0.5ms. Hence, the switching period from the peak value of the backward feeding to the peak value of the forward feeding is set to be shorter for the electrode negative polarity period than for the electrode positive polarity period. During the predetermined delay period Tc from time t5-t51, as shown in Fig. 2(B), the welding current Iw maintains its low level current value by the constant current control. As shown in Fig. 2(C), the welding voltage Vw changes to the arc voltage value. For example, the peak value of the electrode negative polarity forward feeding is set to 80m/min, and the peak value of the electrode negative polarity backward feeding is set to -50m/min. The average value of the feeding speed Fw during the electrode negative polarity period Ten is larger than the average value of the feeding speed Fw during the electrode positive polarity period Tep. The purpose of this is to set the average value of each welding current Iw during both periods to be approximately the same. The delay period Tc is set to 0-0.5ms as with the electrode positive polarity period Tep. The period Tc =0 corresponds to the absence of the delay period Tc.

At time t51, when the delay period Tc ends, as shown in Fig. 2(E), the first arc period signal Sta1 changes to the High level. In respond to this, the constant current control is performed continuously, and as shown in Fig. 2(B), the welding current Iw increases from the low level current to the electrode negative polarity first arc current determined by the first arc current setting signal Ia1r of Fig. 1 by the increasing rate determined by the electrode negative polarity increasing rate setting signal Snr of Fig. 1. When the welding current Iw increases to the electrode negative polarity first arc current value at time t52, as shown in Fig. 2(E), the first arc period signal Sta1 changes to the Low level, and the process ends the first arc period. As shown in Fig. 2(C), the welding voltage Vw also increases by an inclination. The electrode negative polarity increasing rate is set to around 50-500A/ms, and the electrode negative polarity first arc current value is set to around 300-400A, which is smaller than the electrode positive polarity first arc current value.

At time t53, after an elapse of the electrode negative polarity current decreasing time Td, which is determined by the current decreasing time setting signal Tdr of Fig. 1, and which starts from the time t5 of the occurrence of the arc, as shown in Fig. 2(F), the third arc period signal Stas3 changes to the High level. The period of time t52-t53 corresponds to the second arc period Ta2. During this second arc period Ta2, unlike the electrode positive polarity period Tep, the constant current control is performed with the value determined by the electrode negative polarity second arc current setting signal Ia2r of Fig. 1 as the target value. As shown in Fig. 2(B), the welding current Iw takes a value around 50A less than the electrode negative polarity first arc value at time t52 and then decreases over time until time t53. Therefore, the following holds: the electrode negative polarity first arc current value > the electrode negative polarity second arc current value > the electrode negative polarity third arc current value. As shown in Fig. 2(C), the welding voltage Vw also gradually decreases. For example, the electrode negative polarity current decreasing time Td is set to 5ms. The second arc period Ta2 does not take a predetermined value, but is around 4ms. The electrode negative polarity first arc current value, which is the maximum value of the welding current Iw during the first arc period Ta1, is less than the electrode positive polarity first arc current value.

The period between time t53 when the third arc period signal Sta3 changes to the High level and time t6 when the short-circuiting occurs corresponds to the third arc period Ta3. During this third arc period Ta3, the constant current control is performed. As shown in Fig. 2(B), the welding current Iw takes the value determined by the third arc current setting signal Ia3r of Fig. 1. As shown in Fig. 2(C), the welding voltage Vw takes a value less than a voltage value during the second arc period. For example, the third arc current is set to 50A. The third arc period Ta3 does not take a predetermined value, but is around 1ms. As described above, the welding current Iw takes a small value, so that the next short circuit occurs earlier. When the short circuit occurs at time t6, as shown in Fig. 2(D), the short-circuiting determination signal Sd changes to the High level. In respond to this, as shown in Fig. 2(A), the feeding speed Fw starts switching from the peak value of the electrode negative polarity forward feeding to the peak value of the electrode negative polarity backward feeding. The switching period from the peak value of the electrode negative polarity forward feeding to the peak value of the electrode negative polarity backward feeding corresponds to the sum of the electrode negative polarity forward feeding deceleration period and the electrode negative polarity backward feeding acceleration period. For example, each of the electrode negative polarity forward feeding deceleration period and the electrode negative polarity backward feeding acceleration period is set to 0.5ms. Hence, the switching period from the peak value of the backward feeding to the peak value of the forward feeding is set to be shorter during the electrode negative polarity period than during the electrode positive polarity period.

Between time t6-t7, the short-circuiting period starts again, followed by the arc period. The operation during this period is same as the above, and thus the explanation is not repeated. At time t61, which is in the middle of the third arc period Ta3, the period determined by the electrode negative polarity period setting signal Tnr of Fig. 1, which continues from time t4, ends. Then, when the short-circuiting occurs at time t7, as shown in Fig. 2(C), the welding voltage Vw takes the negative short-circuiting voltage value, and as shown in Fig. 2(D), the short-circuiting determination signal Sd changes to the High level. In response to this, as shown in Fig. 2(G), the polarity switching signal Spn changes to the High level so that the electrode positive polarity period Tep starts. The operation after this is the same as the operations after time t1.

Fig. 2 shows the increase of the welding current Iw between time t21-t22 and between time t41-t42 as straight lines, but the increase may include a curve. In this case, the difference in the increasing rate is compared with the largest increasing rate in the curve. In the curve, the increasing rate may decrease or increase over time.

Operations and effects according to the present embodiment are explained below.

According to the present embodiment, the absolute value of the peak value of the forward feeding and the absolute value of the peak value of the backward feeding are set to be larger during the electrode negative polarity period than during the electrode positive polarity period. The electrode negative polarity period has a faster melting speed of the welding wire than the electrode positive polarity period, so that the arc length and the arc period tend to be longer. A long arc period causes a short-circuiting with a large droplet on the tip of the welding wire developed, resulting in an unstable welding status and more spatter generation. In the present embodiment, the absolute value of the peak value of the forward feeding and the absolute value of the peak value of the backward feeding are set to be larger during the electrode negative polarity period than during the electrode positive polarity period. This configuration increases the peak value of the forward feeding during the arc period in the electrode negative polarity period and shortens the arc period. As a result, the short circuit can occur before a large droplet develops on the tip of the welding wire, thereby preventing the welding status from being unstable.

More favorably, according to the present embodiment, the switching period from the peak value of the backward feeding to the peak value of the forward feeding and a switching period from the peak value of the forward feeding to the peak value of the backward feeding are set to be shorter during the electrode negative polarity period than during the electrode positive polarity period. According to this, since the switching period from the peak value of the backward feeding to the peak value of the forward feeding is shorter during the electrode negative polarity period than during the electrode positive polarity period, the feeding speed rapidly reaches the peak value of the forward feeding after the arc occurs. As a result, the short-circuiting period in the electrode negative polarity period can be short, thereby preventing the welding status from being unstable.

More favorably, according to the present embodiment, the average of the feeding speed of the welding wire during the electrode negative polarity period is set to be larger than the average of the feeding speed of the welding wire during the electrode positive polarity period. This can set the average of the welding current to be generally same for the electrode negative polarity period and for the electrode positive polarity period. As a result, the bead appearance becomes favorable.

More favorably, according to the present embodiment, the output is controlled to be the constant voltage during at least a part of the arc period in the electrode positive polarity period, and the output is controlled to be the constant current during the entire arc period in the electrode negative polarity period. During the arc period in the electrode positive polarity period, the arc length is detected from the value of the welding voltage. Thus, by the constant voltage control during at least a part of the arc periods (this part may be the second arc period) in the electrode positive polarity period, the arc length is preferably controlled, and thereby it is possible to maintain the stable welding status. However, the arc length cannot be detected from the value of the welding voltage during the arc period in the electrode negative polarity period. This is because a position of a cathode spot formed on the tip of the welding wire unstably moves during the electrode negative polarity period, and the proportional relationship between the welding voltage and the arc length is disrupted. Hence, even if the constant voltage control is performed so as to preferably maintain the arc length during a part of the arc period in the electrode negative polarity period as with the electrode positive polarity period, the arc length cannot be detected from the value of the welding voltage, so that the welding status becomes rather unstable. Therefore, in the present embodiment, the constant voltage control is performed during at least a part of the arc period in the electrode positive polarity period, thereby preferably maintaining the arc length and stabilizing the welding status. Further, in the present embodiment, the constant current control is performed during the entire arc period in the electrode negative polarity period, thereby preventing the welding status from being unstable if the constant voltage control is performed. As a result, according the present embodiment, the welding status during the electrode negative polarity period can be stabilized, thereby improving the welding quality.

More favorably, according to the present embodiment, the arc period is composed of the first arc period, the second arc period, and the third arc period, the welding current during the first arc period increases by the inclination from the low level current value, and the inclination in the electrode negative polarity period has the increasing rate smaller than the increasing rate in the electrode positive polarity period. During the electrode positive polarity period, the welding current rapidly increases to the first arc current value by setting the increasing rate to a large value. This can ensure that a sufficient heat enters the base material and promote melting of the welding wire to form a proper droplet. Generally, the melting speed of the welding wire is larger during the electrode negative polarity period than the electrode positive polarity period due to the difference of the arc characteristics even if the welding current is the same. Thus, if the increasing rate during the electrode negative polarity period is set to the same value as the increasing rate during the electrode positive polarity period, the melting speed of the welding wire rapidly accelerates and a droplet rapidly develops so as to generate more spatter. Therefore, the increasing rate is set to be smaller during the electrode negative polarity period than during the electrode positive polarity period, thereby slowing down the melting speed of the welding wire and the develop of a droplet. As a result, in the present embodiment, generation of spatter can be inhibited, and the welding status can be more stabilized.

More favorably, according to the present embodiment, the arc period in each of the electrode negative polarity period and the electrode positive polarity period includes the first arc period, the second arc period, and the third arc period, and the maximum value of the welding current (the first arc current value) during the first arc period in the electrode negative polarity period is set to be smaller than the maximum value of the welding current in the electrode positive polarity period. During the electrode positive polarity period, setting the large first arc current value can ensure that a sufficient heat enters the base material and promote melting of the welding wire to form a proper droplet. Due to the difference of the arc characteristics, even if the same value of the welding current is fed, the melting speed of the welding wire during the electrode negative polarity period is larger than the melting speed of the welding wire during the electrode positive polarity period. Thus, if the first arc current value during the electrode negative polarity period is set to the same value as the first arc current value during the electrode positive polarity period, the melting speed of the welding wire rapidly accelerates, a droplet rapidly develops, and more spatters generate. Therefore, the first arc current value during the electrode negative polarity period is set to be smaller than the first arc current value during the electrode positive polarity period, thereby slowing down the melting speed of the welding wire and the develop of a droplet. As a result, in the present embodiment, generation of spatter can be inhibited, and the welding status can be more stabilized.

More favorably, according to the present embodiment, the increasing rate of the welding current during the first arc period in the electrode negative polarity period is set to equal or less than 50% of the increasing rate of the welding current in the electrode positive polarity period. More preferably, the increasing rate of the welding current during the first arc period in the electrode negative polarity period is set to equal or less than 30% of the increasing rate of the welding current in the electrode positive polarity period. According to this, the melting speed of the welding wire during the electrode negative polarity period can be appropriate, thereby stably forming a droplet. As a result, generation of spatter can be inhibited, and the welding status can be more stabilized.

More favorably, according to the present embodiment, the increasing rate during the electrode negative polarity period is set to a value in the range of 50-500A/ms. More preferably, it is set to a value in the range of 50-200A/ms. This allows the welding wire to melt at an appropriate speed during the electrode negative polarity period and to stably form a droplet. As a result, generation of spatter can be inhibited, and the welding status can be more stabilized.

More favorably, according to the present embodiment, the increasing rate during the electrode negative polarity period is set to a smaller value as the first arc current value increases. The larger the average value of the welding current is, the larger the first arc current value is set within around 300-400A, considering heat input to the base material. If the increasing rate is set to the same value, while the first arc current value increases during the electrode negative polarity period, then a droplet may develop excessively and spatter will occur. In order to prevent this, the increasing rate is reduced as the first arc current value increases. As a result, generation of spatter can be inhibited even if the first arc current is set to a large value.

**EXPLANATION OF REFERENCES**

| | | | |
|---|---|---|---|
| 1: | welding wire | 2: base material | 3: arc |
| 4: | welding torch | 5: feeding roll | |
| CM: | current comparison circuit | | |
| Cm: | current comparison signal | | |
| Ea: | discrepancy amplification signal | | |
| EI: | current discrepancy amplification circuit | | |
| Ei: | current discrepancy amplification signal | | |
| EV: | voltage discrepancy amplification circuit | | |
| Ev: | voltage discrepancy amplification signal | | |
| FC: | feeding control circuit | | |
| Fc: | feeding control signal | | |
| FR: | feeding speed setting circuit | | |
| Fr: | feeding speed setting signal | | |
| Fw: | feeding speed | | |
| IA1R: | first arc current setting circuit | | |
| Ia1r: | first arc current setting signal | | |
| IA2R: | telectrode negative polarity second arc current setting circuit | | |
| Ia2r: | electrode negative polarity second arc current setting signal | | |
| IA3R: | third arc current setting circuit | | |
| Ia3r: | third arc current setting signal | | |
| ICR: | current control setting circuit | | |
| Icr: | current control setting signal | | |
| ID: | current detection circuit | | |
| Id: | current detection signal | | |
| ILR: | low level current setting circuit | | |
| Ilr: | low level current setting signal | | |
| Iw: | welding current | | |
| ND: | constriction detection circuit | | |
| Nd: | constriction detection signal | | |
| PM: | main power supply circuit | | |
| SD: | short-circuiting determination circuit | | |
| Sd: | short-circuiting determination signal | | |
| SNR: | electrode negative polarity increasing rate setting circuit | | |
| Snr: | electrode negative polarity increasing rate setting signal | | |
| SPN: | polarity switching circuit | | |
| Spn: | polarity switching signal | | |
| SPR: | electrode positive polarity increasing rate setting circuit | | |
| Spr: | electrode positive polarity increasing rate setting signal | | |
| SR: | increasing rate setting circuit | | |
| Sr: | increasing rate setting signal | | |
| Sta1: | first arc period signal | | |
| STA3: | third arc period circuit | | |
| Sta3: | third arc period signal | | |
| SW: | power supply characteristic switching circuit | | |
| Tc: | delay period | | |
| Td: | current decreasing time | | |
| TDR: | current decreasing time setting circuit | | |
| Tdr: | current decreasing time setting signal | | |
| TNR: | electrode negative polarity period setting circuit | | |
| Tnr: | electrode negative polarity period setting signal | | |
| TPR: | electrode positive polarity period setting circuit | | |
| Tpr: | electrode positive polarity period setting signal | | |
| Trd: | backward feeding deceleration period | | |
| TRDR: | backward feeding deceleration period setting circuit | | |
| Trdr: | backward feeding deceleration period setting signal | | |
| Trp: | backward feeding peak period | | |
| Tru: | backward feeding acceleration period | | |
| TRUR: | backward feeding acceleration period setting circuit | | |
| Trur: | backward feeding acceleration period setting signal | | |
| Tsd: | forward feeding deceleration period | | |
| TSDR: | forward feeding deceleration period setting circuit | | |
| Tsdr: | forward feeding deceleration period setting signal | | |
| Tsp: | forward feeding peak period | | |
| Tsu: | forward feeding acceleration period | | |
| TSUR: | forward feeding acceleration period setting circuit | | |
| Tsur: | forward feeding acceleration period setting signal | | |
| VD | voltage detection circuit | | |
| Vd: | voltage detection signal | | |
| VR: | voltage setting circuit | | |
| Vr: | voltage setting signal | | |
| Vw: | welding voltage | | |
| WM: | feeding motor | | |
| Wrp: | backward feeding peak value | | |
| WRR: | backward feeding peak value setting circuit | | |
| Wrr: | backward feeding peak value setting signal | | |
| Wsp: | forward feeding peak value | | |
| WSR: | forward feeding peak value setting circuit | | |
| Wsr: | forward feeding peak value setting signal | | |

## Claims

1. A method of control of arc welding with an AC consumable electrode, the method comprising:
repeating a short-circuiting period and an arc period between a welding wire (1) and a base material (2);
backward-feeding the welding wire (1) backward during the short-circuiting period and forward-feeding the welding wire (1) forward during the arc period;
performing the arc welding by cyclically switching between an electrode positive polarity period and an electrode negative polarity period each including at least one arc period; and
setting an absolute value of a peak value of the forward-feeding and an absolute value of a peak value of the backward-feeding to be larger during the electrode negative polarity period than during the electrode positive polarity period; **characterized in that** the method further comprises:
setting an average of a feeding speed of the welding wire (1) to be larger during the electrode negative polarity period than during the electrode positive polarity period.

2. The method according to claim 1, further comprising setting a switching period from the peak value of the backward-feeding to the peak value of the forward-feeding and a switching period from the peak value of the forward-feeding to the peak value of the backward-feeding to be shorter during the electrode negative polarity period than during the electrode positive polarity period.

3. The method according to claim 1 or 2, further comprising:
controlling an output by a constant voltage control for at least a part of the arc period in the electrode positive polarity period; and
controlling the output by a constant current control for an entirety of the arc period in the electrode negative polarity period.

4. The method according to claim 1 or 2, wherein the arc period in each of the electrode negative polarity period and the electrode positive polarity period includes a first arc period, a second arc period, and a third arc period,
the method further comprising:
increasing a welding current during the first arc period by an inclination from a low level current value; and
setting an increasing rate of the inclination to be smaller in the electrode negative polarity period than in the electrode positive polarity period.

5. The method according to claim 1 or 2, wherein the arc period in each of the electrode negative polarity period and the electrode positive polarity period includes a first arc period, a second arc period, and a third arc period,
the method further comprising setting a maximum value of a welding current during the first arc period to be smaller in the electrode negative polarity period than in the electrode positive polarity period.

## Patentansprüche

1. Verfahren zur Steuerung des Lichtbogenschweißens mit einer Wechselstrom-Schmelzelektrode, wobei das Verfahren umfasst:
Wiederholen einer Kurzschlussphase und einer Lichtbogenphase zwischen einem Schweißdraht (1) und einem Grundwerkstoff (2);
Rückwärtsführen des Schweißdrahts (1) während der Kurzschlussperiode und Vorwärtszuführen des Schweißdrahts (1) während der Lichtbogenperiode;
Durchführen des Lichtbogenschweißens durch zyklisches Umschalten zwischen einer Periode mit positiver Elektrodenpolarität und einer Periode mit negativer Elektrodenpolarität, die jeweils mindestens eine Lichtbogenperiode umfassen; und
Festlegen eines Absolutwerts eines Spitzenwerts der Vorwärtszuführung und eines Absolutwerts eines Spitzenwerts der Rückwärtsführung, die während der Phase der negativen Elektrodenpolarität größer sind als während der Phase der positiven Elektrodenpolarität; **dadurch gekennzeichnet, dass** das Verfahren ferner umfasst:
Festlegen eines Durchschnittswerts der Zuführgeschwindigkeit des Schweißdrahts (1), der während der Negativpolaritätsperiode der Elektrode größer ist als während der Positivpolaritätsperiode der Elektrode.

2. Verfahren nach Anspruch 1, das ferner umfasst:
Festlegen einer Umschaltdauer vom Spitzenwert des Rückwärtsführens zum Spitzenwert des Vorwärtszuführens und einer Umschaltdauer vom Spitzenwert des Vorwärtszuführens zum Spitzenwert des Rückwärtsführens, die während der Phase der negativen Elektrodenpolarität kürzer ist als während der Phase der positiven Elektrodenpolarität.

3. Verfahren nach Anspruch 1 oder 2, das ferner umfasst:
Steuern einer Leistung durch eine Konstantspannungssteuerung für zumindest einen Teil der Lichtbogenperiode in der Periode der positiven Elektrodenpolarität; und
Steuerung der Leistung durch eine Konstantstromregelung während der gesamten Lichtbogenperiode in der Phase mit negativer Elektrodenpolarität.

4. Verfahren nach Anspruch 1 oder 2, wobei die Lichtbogenperiode sowohl in der Phase mit negativer Elektrodenpolarität als auch in der Phase mit positiver Elektrodenpolarität eine erste Lichtbogenperiode, eine zweite Lichtbogenperiode und eine dritte Lichtbogenperiode umfasst,
wobei das Verfahren ferner umfasst:
Erhöhen eines Schweißstroms während der ersten Lichtbogenperiode um einen Anstiegswert ausgehend von einem niedrigen Stromwert; und
Festlegen einer Anstiegsrate des Anstiegs, die in der Periode der negativen Elektrodenpolarität kleiner ist als in der Periode der positiven Elektrodenpolarität.

5. Verfahren nach Anspruch 1 oder 2, wobei die Lichtbogenperiode sowohl in der Periode der negativen Elektrodenpolarität als auch in der Periode der positiven Elektrodenpolarität eine erste Lichtbogenperiode, eine zweite Lichtbogenperiode und eine dritte Lichtbogenperiode umfasst,
wobei das Verfahren ferner umfasst, dass ein Maximalwert des Schweißstroms während der ersten Lichtbogenperiode so eingestellt wird, dass er in der Periode mit negativer Elektrodenpolarität kleiner ist als in der Periode mit positiver Elektrodenpolarität.

## Revendications

1. Procédé de commande de soudage à l'arc avec une électrode consommable en courant alternatif, le procédé comprenant :
la répétition d'une période de court-circuit et d'une période d'arc entre un fil de soudage (1) et un matériau de base (2) ;
le déplacement inverse du fil de soudage (1) vers l'arrière au cours de la période de court-circuit et le déplacement normal du fil de soudage (1) vers l'avant au cours de la période d'arc ;
l'exécution du soudage à l'arc en assurant une commutation de manière cyclique entre une période à polarité d'électrode positive et une période à polarité d'électrode négative, chacune comportant au moins une période d'arc ; et
le réglage d'une valeur absolue d'une valeur de crête du déplacement normal et d'une valeur absolue d'une valeur de crête du déplacement inverse de manière qu'elle soit supérieure, au cours de la période à polarité d'électrode négative, à celle au cours de la période à polarité d'électrode positive ;
**caractérisé en ce que** le procédé comprend, en outre :
le réglage d'une moyenne d'une vitesse d'alimentation du fil de soudage (1) de manière qu'elle soit supérieure au cours de la période à polarité d'électrode négative à celle au cours de la période à polarité d'électrode positive.

2. Procédé selon la revendication 1, comprenant, en outre :
le réglage d'une période de commutation à partir de la valeur de crête du déplacement inverse jusqu'à la valeur de crête du déplacement normal et d'une période de commutation à partir de la valeur de crête du déplacement normal jusqu'à la valeur de crête du déplacement inverse de manière qu'elle soit inférieure, au cours de la période à polarité d'électrode négative, à celle au cours de la période à polarité d'électrode positive.

3. Procédé selon la revendication 1 ou 2, comprenant, en outre :
la commande d'une sortie par une commande à tension constante pendant au moins une partie de la période d'arc dans la période à polarité d'électrode positive ; et
la commande de la sortie par une commande à courant constant pendant la totalité de la période d'arc sur la période à polarité d'électrode négative.

4. Procédé selon la revendication 1 ou 2, dans lequel la période d'arc pour chacune de la période à polarité d'électrode négative et de la période à polarité d'électrode positive comporte une première période d'arc, une deuxième période d'arc et une troisième période d'arc,
le procédé comprenant, en outre :
l'augmentation d'un courant de soudage au cours de la première période d'arc avec une certaine pente à partir d'une valeur de courant de faible niveau ; et
le réglage d'un taux de croissance de la pente de telle sorte qu'il soit inférieur dans la période à polarité d'électrode négative à celui dans la période à polarité d'électrode positive.

5. Procédé selon la revendication 1 ou 2, dans lequel la période d'arc pour chacune de la période à polarité d'électrode négative et de la période à polarité d'électrode positive comporte une première période d'arc, une deuxième période d'arc et une troisième période d'arc,
le procédé comprenant, en outre, le réglage d'une valeur maximum d'un courant de soudage au cours de la première période d'arc de telle sorte qu'il soit inférieur dans la période à polarité d'électrode négative à celui dans la période à polarité d'électrode positive.
